Europäisches Patentamt

**European Patent Office**

**Office européen des brevets**

(11) Publication number: **0 055 123**
A1

# EUROPEAN PATENT APPLICATION

(21) Application number: **81306017.5**

(51) Int. Cl.³: **H 04 L 25/49**, H 04 L 7/02

(22) Date of filing: **22.12.81**

(30) Priority: **22.12.80 US 219407**

(71) Applicant: **Honeywell Information Systems Inc., 200 Smith Street, Waltham Massachusetts 02154 (US)**

(43) Date of publication of application: **30.06.82 Bulletin 82/26**

(72) Inventor: **Jacobsthal, Herbert K., 5525 East Shangri La Road, Scottsdale Arizona 85254 (US)**

(84) Designated Contracting States: **BE CH DE FR GB IT LI NL SE**

(74) Representative: **Harman, Michael Godfrey et al, Honeywell Control Systems Ltd. Patent Department Charles Square, Bracknell Berks RG12 1EB (GB)**

(54) Data transmission system.

(57) A binary serial data transmission system utilizes four voltage levels A to D, with a 0 being coded as a single-step transition towards or between the two intermediate levels B and C, and a 1 being coded as a double-step transition between levels A and C or levels B and D. The encoder may comprise four flip-flops corresponding to the four levels, with logic circuitry to set just the appropriate one, and gating four voltage sources. The decoder may differentiate the signal to yield spikes of two magnitudes and either polarity, four comparators one for each combination of spike voltage and polarity, logic circuitry which sets a flip-flop on outputs from two comparators and resets it on an output from only one, and clock circuitry which produces a clock pulse on any spike.

EP 0 055 123 A1

0055123

# DATA TRANSMISSION SYSTEM

The present invention relates to data transmission, and more specifically to a technique for transmitting serial binary data on a single line by means of more than 2 voltage levels.

The transmission of binary serial data involves a timing problem. If a transmitter and a receiver are kept in synchronism, then there must be some form of timing signal channel between the two stations, separate from the data channel. If only a single channel is available, then some means must be devised of passing timing information as well as the data itself over that channel.

It has been proposed to use three signal levels (DC levels or frequency values), say A, B, and C, with transitions from A to B, B to C, and C to A representing 0's and A to C, C to B, and B to A representing 1's. This technique clearly allows a stream of binary information to be passed completely asynchronously; each new bit is immediately recognizable no matter how long it is since the previous bit was received.

However, while this technique may be satisfactory for frequency modulation signalling, it has the drawback for DC signalling that there may be a net imbalanced DC component. It is therefore desirable to devise a signalling system in which the DC component in the transmission line can be more nearly balanced.

Accordingly the present invention provides a serial binary data transmission system wherein bits are coded by transitions between more than 2 voltage levels, characterized in that four voltage levels, A,B,C, and D in order are used, 0 being coded by a single-step level transition towards or between the two intermediate levels B and C, and 1 being coded by a double-step transition between levels A and C or the levels B and D. The invention also provides encoding and decoding circuitry for encoding and decoding such signals.

The invention will be further described with reference to the drawings, in which:

Figures 1A and 1B illustrate the coding system;

Figure 2 shows, by way of example, coding circuitry;

Figure 3 shows, by way of example, decoding circuitry; and

Figure 3A shows waveforms associated with the decoding circuitry of Figure 3.

The present data transmission system is useful for passing binary serial data over a single-line bus. It will be realized, of course, that this bus may have a plurality of transmitters and receivers coupled to it. Each transmitter will include means which detect when the bus is in use by another transmitter, so that only one transmitter will be transmitting at a time. The data being transmitted may be broadcast to all receivers, or it may include address information by means of which the receiver for which it is intended will accept it and the other receivers will ignore it.

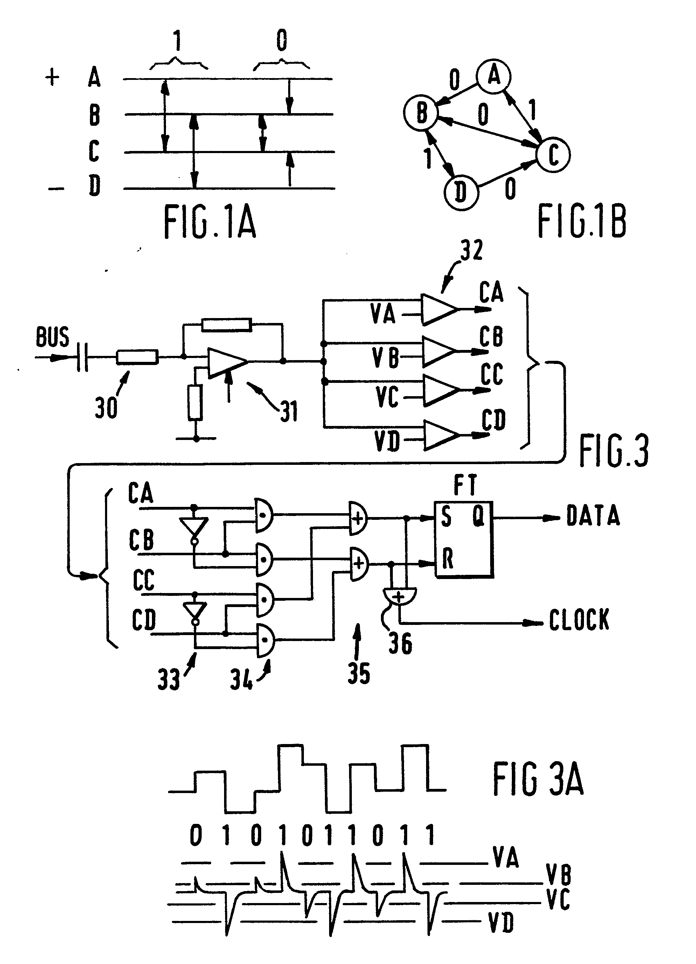

Figure 1A shows the four voltage levels A,B,C, and D which are used by the system. These four levels are equally spaced, and the 0 V level is level C. A bit is coded as a transition between levels. As shown, a 0 bit is coded as a single step transition finishing at one or other of the two middle levels B and C, and a 1 is coded as a double step transition. Figure 1B shows the 0 and 1 transitions slightly more abstractly. It will be noted that there are just two possible transitions away from any given level - one for a 0 and the other for a 1.

Figure 2 shows encoding circuitry for the system. Data is fed to the data input of a data flip-flop FS, and clock pulses are fed to the clock input of this flip-flop. The direct (Q) and complementary ($\overline{Q}$) outputs of this flip-flop are fed to a set of AND gates 10 and OR gates 11 which feed four level flip-flops FA to FD. These level flip-flops have their outputs fed back to the gates 10 and 11. The gates are arranged so that one and only one of the flip-flops FA to FD is set at all times, the one which is set corresponding to the voltage level which is to be transmitted. Thus suppose for example that flip-flop FA is set initially. Its output enables the two AND gates 12 and 13. If data flip-flop FS is set, by a 1 bit, then this enables the second input of AND gate 13, so that a 1 passes from gate 13 through the OR gate 15 and the next clock pulse causes flip-flop FC to be set. If on the other hand the data flip-flop FS is cleared, by a 0 bit, then this enables the second input of AND gate 12, so that a 1 passes from gate 12 through gate 14 to the data input of flip-flop FB, and the next clock pulse causes the flip-flop to be set. In both cases, the AND gate 16 is not fully enabled, so that same clock pulse which sets flip-flop FB or FC resets flip-flop FA, this latter flip-flop having a 0 at its data input.

The remaining AND gates can similarly be found to cause the remaining transitions to occur in accordance with the scheme of Figures 1A and 1B.

A set of voltage level sources 20 provide the four voltage levels required. One of these sources, for level C, is simply a direct connection to earth, since level C is 0 V. For level A, the voltage source comprises an operational amplifier OP1 with negative feedback and fed from a voltage divider R1 and R2. The voltage source for level B includes a similar operational amplifier OP2; the voltage source for level D includes an operational amplifier OP3 which is connected slightly differently because level D is negative.

The four flip-flops FA to FD control four respective FET gates 21 which couple these four voltage sources to a common point which feeds the bus as indicated. Thus whichever of the flip-flops FA to FD is set couples the corresponding voltage level onto the bus.

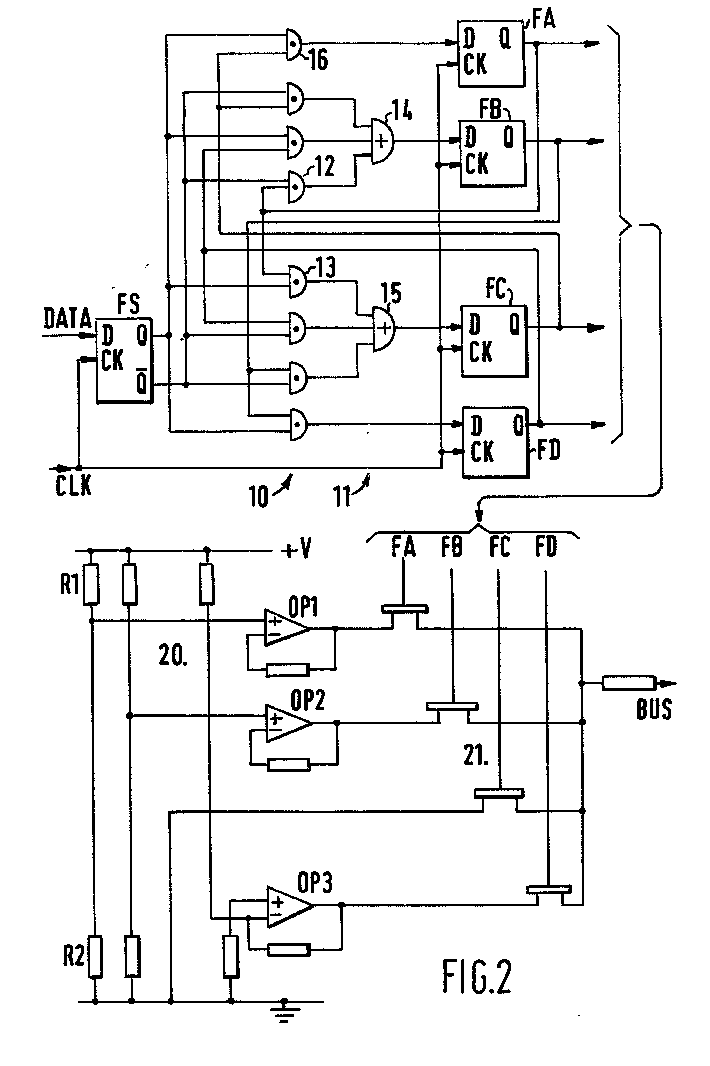

Figure 3 shows the decoding circuitry for the system. The signal on the bus has the form shown in the upper waveform of Figure 4A. This is differentiated by circuit 31 to produce a signal of the form shown by the lower waveform of Figure 3A. This pulse signal is passed through an automatic gain control circuit 31 and fed to a set of four comparators 32, which are fed with four voltages VA to VD. It will be noted that these voltages, as shown by Figure 3A, have the 0 V level midway between voltages VB and VC; this is because of the differentiation which the bus signal has undergone.

The signals CA to CD from the four comparators 32 are fed, via a logic network of two inverters 33, four AND gates 34, and two OR gates 35 to an output data flip-flop FT. It can be seen that a pulse from either CB or CC will pass through the corresponding one of the middle two AND gates 34 to the lower of the two OR gates 35 and set flip-flop FT to 0. However, if there is a simultaneous pulse from CA or CD, this process will be blocked, and instead the pulse will pass through one or other of the two outer AND gates 34 and the upper of the two OR gates 35 to the set input of flip-flop FT, setting it to 1.

At the same time, the pulse from whichever of the two OR gates 35 passes a 1 is fed to a further OR gate 36, which produces an output clock pulse indicating that a fresh bit has been received.

0055123

## CLAIMS

1. A serial binary data transmission system wherein bits are coded by transitions between more than 2 voltage levels, characterized in that four voltage levels A, B,C, and D in order are used, 0 being coded by a single-step level transition towards or between the two intermediate levels B and C, and 1 being coded by a double-step transition between the levels A and C or the levels B and D.

2. Encoding circuitry for encoding data according to the system of Claim 1, characterized by a set of four flip-flops (FA to FD) corresponding to the four voltage levels and logic circuitry (10,11) coupled thereto and responsive to incoming data bits to set one or other of the four flip-flops in accordance with the voltage level to be produced.

3. Encoding circuitry according to Claim 2, characterized by a set of four voltage sources (20) corresponding to the four voltage levels, and a set of four switches (21) connected to the voltage sources and controlled by the four flip-flops.

4. Decoding circuitry for decoding data according to the system of Claim 1, characterized by a differentiating circuit (30) which produces spikes of two different magnitudes corresponding to the two different bit values 0 and 1.

5. Decoding circuitry according to Claim 4, characterized by four comparators (32) to which the spikes are fed, each comparator being responsive to a spike size of distinct magnitude and polarity.

6. Decoding circuitry according to Claim 5, characterized by logic circuitry (33-35) feeding a flip-flop (FT) to set the flip-flop in response to outputs from two of the comparators and to reset it in response to an output from only one of the comparators.

7. Decoding circuitry according to any one of Claims 4 to 6, characterized by circuitry (36) responsive to any spike to produce a clock pulse.

0055123

FIG.1A

FIG.1B

FIG.3

FIG 3A

FIG.2

0055123

European Patent
Office

**EUROPEAN SEARCH REPORT**

Application number

EP 81 30 6017

## DOCUMENTS CONSIDERED TO BE RELEVANT

| Category | Citation of document with indication, where appropriate, of relevant passages | Relevant to claim | CLASSIFICATION OF THE APPLICATION (Int. Cl.³) |
|---|---|---|---|
| XA | ELECTRONICS AND COMMUNICATIONS IN JAPAN, vol.55-A, no.2, February 1972 WASHINGTON DC (US) T. ASABE et al.: "On Cyclic Multi-level Codes" pages 8-15 <br><br> * Page 11, left-hand column, last five lines, right-hand column, lines 1-9,29-30 * | 1,2,3, 7 | H 04 L 25/49 <br> H 04 L 7/02 |
| A | US - A - 3 559 067 (GENEST) <br><br> * Column 2, lines 37-41 * | 1,2 | TECHNICAL FIELDS SEARCHED (Int.Cl.³) <br><br> H 04 L 25/49 <br> H 04 L 7/02 |
| A | THE BELL SYSTEM TECHNICAL JOURNAL, vol.50, no.2, February 1971 NEW YORK (US) C.W. BRODERICK: "A Digital Transmission System for TD-2 Radio" pages 401-499 <br><br> * Figure 5 * | 1,3 | |
| A | US - A - 3 512 093 (PERREAULT) <br><br> * Column 1, lines 13-18,57-60 * | 1,4,7 | CATEGORY OF CITED DOCUMENTS |
| A | NEREM RECORD 1965, IEEE NEW YORK (US) A.M. GERRISH: "Performance of a Variable Multilevel Coder for Binary Data Transmission" pages 230,231 <br><br> * Page 230, left-hand column, lines 10-15 * <br><br> ./. | 1-7 | X: particularly relevant if taken alone <br> Y: particularly relevant if combined with another document of the same category <br> A: technological background <br> O: non-written disclosure <br> P: intermediate document <br> T: theory or principle underlying the invention <br> E: earlier patent document, but published on, or after the filing date <br> D: document cited in the application <br> L: document cited for other reasons <br><br> &: member of the same patent family, corresponding document |

| | The present search report has been drawn up for all claims | | |
|---|---|---|---|
| Place of search <br> The Hague | Date of completion of the search <br> 02-04-1982 | Examiner <br> GEISLER | |

European Patent
Office

| DOCUMENTS CONSIDERED TO BE RELEVANT | | | CLASSIFICATION OF THE APPLICATION (Int. Cl.3) |
|---|---|---|---|
| Category | Citation of document with indication, where appropriate, of relevant passages | Relevant to claim | |
| A | US - A - 3 573 766 (PERKINS)<br>* Column 4, lines 50-62; column 4, lines 9-24 * | 1-7 | |
| | ---- | | |
| | | | TECHNICAL FIELDS SEARCHED (Int. Cl.³) |